# EUROPÄISCHE PATENTSCHRIFT

(11) **EP 0 566 923 B1**
(45) Veröffentlichungstag und Bekanntmachung des Hinweises auf die Patenterteilung: **30.10.1996**
(21) Anmeldenummer: 93105618.8
(22) Anmeldetag: 05.04.1993
(51) Int. Cl.: G01D 5/246, G01D 5/247

(54) **Vorrichtung zum berührungslosen Messen der axialen Lage eines rotierenden Körpers**
Device for the contactless measurement of the axial position of a rotating object
Dispositif pour mesurer sans contact la position axiale d'un objet tournant

(30) Priorität: 24.04.1992 DE 4213507
(43) Veröffentlichungstag der Anmeldung: 27.10.1993
(73) Patentinhaber: WILO GmbH, D-44263 Dortmund (DE)
(72) Erfinder: Dettmann, Fritz, Dr., Dipl.-Ing., W-6334 Asslar-Klein-Altenstädten (DE); Loreit, Uwe, Dipl.-Ing., W-6330 Wetzlar 21 (DE)
(74) Vertreter: COHAUSZ HASE DAWIDOWICZ & PARTNER

(56) Entgegenhaltungen:
- EP-A- 0 353 076
- EP-A- 0 443 514
- US-A- 4 951 500
- N.T.I.S. TECHNICAL NOTES Bd. F, Nr. 6, Juni 1986, SPRINGFIELD,VIRGINIA,USA Seite 690 ARTHUR J. HILL 'Shaft Axial-Displacement Sensor'

## Beschreibung

Die Erfindung betrifft eine Vorrichtung zum berührungslosen Messen der axialen Lage eines rotierenden Körpers mit den Merkmalen des Oberbegriffs von Patentanspruch 1.

Eine derartige Vorrichtung ist in der Druckschrift N.T.I.S. Technical Notes, Bd. F, Nr. 6. Juni 1986, S. 690 beschrieben, die sich bereits durch einen einfachen Aufbau auszeichnet. Auf der Welle befindet sich eine Scheibe mit einer bestimmten Breite. Am Umfang der Scheibe befinden sich jeweils um 90° versetzt vier Flügel, die sich über einen bestimmten Bereich des Umfanges erstrecken. Der Scheibe steht in radialer Richtung ein Magnetfeldsensor gegenüber. Im Bereich der Flügel ist der Abstand der Sensorspitze zum magnetischen Material wesentlich geringer als in den Bereichen zwischen den Flügeln. Das Ausgangssignal des magnetischen Sensors hängt von diesem Abstand ab.

Bei Rotation der Welle um eine volle Umdrehung entsteht deshalb am Sensorausgang eine Folge von vier Impulsen. Dieses kann zur Ermittlung der Drehgeschwindigkeit der Welle benutzt werden.

Nun erstrecken sich jedoch zwei gegenüberliegende Flügel in ihrer axialen Ausdehnung nicht in ihrem gesamten Bereich über die volle Breite der Scheibe, sondern bei einem dieser beiden Flügel ist bei seitlicher Sicht auf die Scheibe die linke Kante angeschrägt und bei dem anderen der rechte. Bei seitlicher Verschiebung der Welle mit der Flügelscheibe nach links wird deshalb der Impuls bei dem Flügel mit der Anschrägung auf der rechten Seite eine geringere Amplitude haben im Vergleich mit den Impulsen an den Flügeln mit voller Breite, bei Verschiebung nach rechts tritt das bei dem Flügel mit der linken schrägen Kante auf. Damit ist also eine axiale Verschiebung nachweisbar.

Nachteilig an diesem Verfahren wirkt sich der nichtlineare Zusammenhang zwischen dem Abstand des Sensors zur Oberfläche und seinem Ausgangssignal sowie eine zusätzliche Temperaturabhängigkeit des Sensorausgangssignales aus. Diese beiden Größen müssen in der Auswerteschaltung berücksichtigt werden, um die axiale Verschiebung quantitativ angeben zu können, was zu einem erheblichen Schaltungsaufwand führt.

Weiterhin ist das Meßsystem nicht in der Lage, eine Veränderung der Montagelage des Sensors im Betrieb der Anlage, die auch in einer Abstandsänderung des Sensors von der Welle bestehen kann, von einer axialen Verschiebung zu unterscheiden. Da die Abstandsabhängigkeit der Sensorausgangsspannung durch die magnetischen Materialeigenschaften wesentlich beeinflußt wird, die in der üblichen Fertigung nur mit großen Toleranzen gehalten werden können, wird für genaue Messungen die Einreichung jedes Einzelexemplars der Sensoranordnung nicht zu umgehen sein.

Die Erfindung vermeidet diese Nachteile. Ihr liegt die Aufgabe zugrunde, einen temperaturunabhängigen Geber vorzuschlagen, der wenig Platz benötigt und auch wenig kompliziert aufgebaut ist.

Die Lösung dieser Aufgabe gelingt gemäß Patentanspruch 1.

Obwohl der Mittelpunkt des Körpers der Vorrichtung gemäß der Erfindung mit seiner Rotationsachse übereinstimmt, ist er so angeordnet oder gestaltet, daß sich sein Rand bei Rotation des Körpers bezüglich des feststehenden Magnetfeldsensors periodisch hin- und herbewegt. Das kann beispielsweise dadurch erfolgen, daß eine vollständig ebene magnetische Scheibe einen Winkel mit der Rotationsebene bildet. Dadurch befindet sich der Rand der Scheibe während einer halben Umdrehung links versetzt von der Rotationsebene und während der anderen halben Umdrehung rechts versetzt. Der Magnetfeldsensor detektiert die Magnetfeldkomponente in axialer Richtung. Ist die Scheibe beispielsweise permanentmagnetisch und in radialer Richtung magnetisiert, so ist direkt über dem Scheibenrand in der Mitte nur die radiale Feldkomponente vorhanden. Links und rechts von der Mitte gibt es mit dem Abstand zunehmende axiale Feldkomponenten mit entgegengesetzter Richtung. Der Magnetfeldsensor stellt den Nulldurchgang der axialen Feldkomponente fest, und die Triggerschaltung schaltet beispielsweise bei dem entsprechenden Sensorausgangswert ihre Ausgangsspannung um. Befindet sich der Magnetfeldsensor in der Rotationsebene, werden so am Ausgang der Triggerschaltung bei konstanter Rotationsgeschwindigkeit des Körpers die beiden möglichen Spannungswerte abwechselnd mit gleicher Dauer auftreten. Bei Links- oder Rechtsverschiebung des Körpers mit der magnetischen Scheibe treten die Spannungswerte mit unterschiedlicher Dauer auf. Das als Tastverhältnis bezeichnete Verhältnis der Dauer des höheren Spannungspegels am Triggerausgang zur Dauer des niedrigen Spannungspegels wird sich also kontinuierlich mit der Verschiebung des Körpers verändern.

Daß als Ausgangsgröße das Tastverhältnis benutzt wird, ist vorteilhaft, weil die Temperaturabhängigkeit der Magnetfeldstärke des Permanentmagneten und die der Sensorempfindlichkeit darauf keinen Einfluß haben. Der Magnetfeldsensor wird lediglich als Nulldetektor betrieben. Auch sein radialer Abstand zum Rand der magnetischen Scheibe spielt keine Rolle, solange er empfindlich genug ist, die axiale Magnetfeldkomponente zu erfassen. Damit ist die Lagejustierung in dieser Richtung überflüssig.

Wird der rotierende Körper mit der magnetischen Scheibe soweit in axialer Richtung verschoben, daß der Rand der Scheibe sich immer rechts oder links vom Magnetfeldsensor befindet, tritt natürlich das Umschalten der Ausgangsspannung nicht mehr auf. Damit ist der Meßbereich überschritten. Aus dem Spannungspegel am Triggerausgang ist aber erkennbar, ob sich der Körper links oder rechts vom Meßbereich befindet, da das vom Magnetfeldsensor nachweisbare Magnetfeld der dauermagnetischen Scheibe axial über ihre Ausdehnung hinausreicht.

Als Magnetfeldsensoren in der Anordnung sind insbesondere solche auf der Basis des anisotropen magnetoresistiven Effektes vorgesehen, da diese eine hohe Magnetfeldempfindlichkeit aufweisen und auf Chipflächen von weniger als ein Quadratmillimeter untergebracht sind. So ist die Magnetfeldmessung mit hoher Ortsauflösung gewährleistet.

Für die runde magnetische Scheibe kann in einer anderen Ausführung der Erfindung auch weichmagnetisches Material verwendet werden. Dann ist jedoch zur Erzeugung eines Magnetfeldes ein zusätzlicher Dauermagnet vorhanden. Vorzugsweise ist dieser von der magnetischen Scheibe weiter entfernt als der Magnetfeldsensor. Die vom Dauermagneten ausgehenden Feldlinien treten auf kürzestem Wege in die weichmagentische Scheibe ein. Befinden sich Magnet, Magnetfeldsensor und Rand der Scheibe in einer Linie, tritt so am Magnetfeldsensor keine axiale Feldkomponente auf. Eine axiale Komponente entsteht, wenn der Rand links oder rechts in axialer Richtung verschoben ist. Damit kann die axiale Lageerkennung analog zum oben beschriebenen Fall erfolgen.

Die magnetische Scheibe muß nicht unbedingt in sich völlig eben sein. Vielmehr entsprechen auch Scheiben aus magnetischem Material, die einen ebenen zentralen Bereich haben und deren Rand mit einer ganzzahligen Anzahl von Perioden aus dieser Ebene wechselseitig herausgebogen ist, der Erfindung. Der Rand der Scheibe, die eine gewisse Dicke aufweist, kann auch mit Zähnen versehen sein, bei denen das Verhältnis von Zahnbreite zu Zahnabstand in axialer Richtung variiert. Auch bei diesen Ausführungsformen wird mit Hilfe des Magnetfeldsensors und der Triggerschaltung ein von der axialen Lage abhängiges Tastverhältnis gewonnen. Die Frequenz der Impulsfolge, die hier am Ausgang der Triggerschaltung erhalten wird, ist jedoch um einen Faktor größer als die Rotationsfrequenz des Körpers, der durch die Anzahl der Perioden des wechselseitig herausgebogenen Randes oder durch Anzahl der Zähne gegeben ist. Damit ist die Messung der axialen Lage schon während eines Bruchteils einer Umdrehung möglich.

Durch eine Schaltung, die das Tastverhältnis des Triggersignals auswertet und eine weitere Schaltung, die die Frequenz des Triggersignals auswertet, können die Drehzahl und die axiale Lage des rotierenden Körpers gleichzeitig ermittelt werden.

Die erfindungsgemäße Anordnung wird anhand der Zeichnung näher erläutert. Es zeigen:
- Fig. 1: eine schematische Darstellung einer Ausführung der Erfindung und
- Fig. 2: die Ausgangsspannung der Triggerschaltung als Zeitfunktion für verschiedene axiale Lagen und die dazugehörige Ausgangsspannung der Auswerteschaltung.

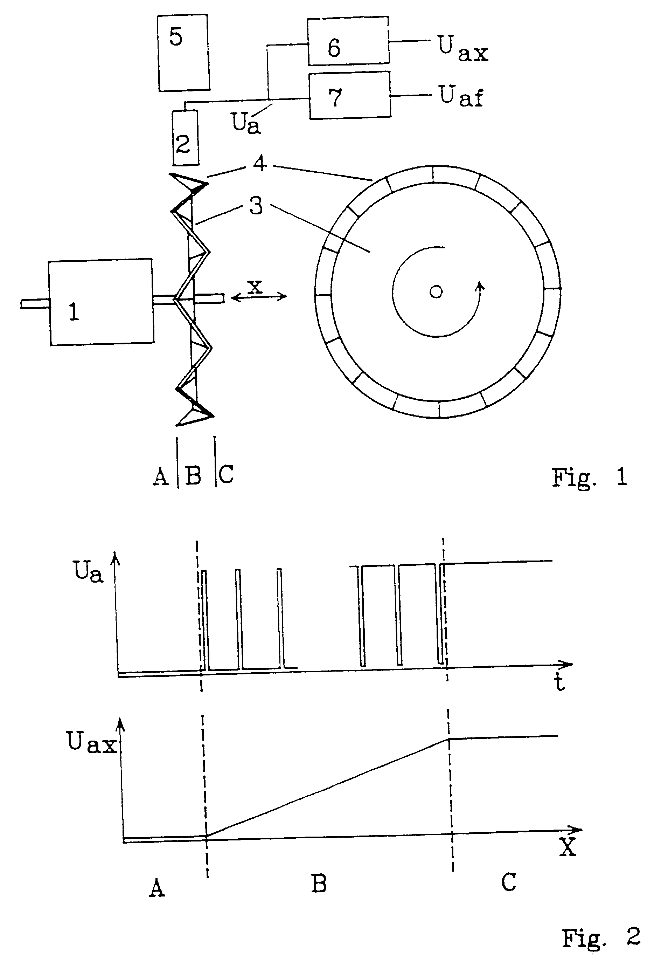

Entsprechend Fig. 1 ist auf der Achse eines rotierenden Körpers 1 eine weichmagnetische Scheibe 3 befestigt. In ihrem Mittelteil ist diese Scheibe 3 eben. Die Scheibenebene befindet sich hier in der Rotationsebene, die sich senkrecht zur Drehachse ausbreitet. Der Rand der Scheibe 3 ist in periodischen Abständen abwechselnd nach links und rechts aus der Ebene herausgebogen. Wie aus der rechts in der Fig. 1 dargestellten Aufsicht auf die Scheibenebene hervorgeht, sind über den Scheibenumfang acht Perioden vorhanden. Oberhalb der Scheibe 3 befindet sich ein Magnetfeldsensor 2, darüber ist ein Dauermagnet 5 angebracht. Der Nordpol des Magneten zeigt zu dem Magnetfeldsensor 2. Die aus dem Nordpol austretenden Magnetfeldlinien treten in den Rand 4 der weichmagnetischen Scheibe 3 ein, wobei sie den Abstand zwischen dem Magneten 5 und dem Rand 4 auf kürzestem Wege überbrücken. Der Magnetfeldsensor 2 mißt nur die Magnetfeldkomponente, die in axiale Richtung zeigt. Im dargestellten Beispiel handelt es sich um einen Sensor auf der Basis des anisotropen mangetoresistiven Effektes. Die Schichtebene des Magnetfeldsensors 2 stimmt mit der Zeichnungsebene überein. Seine Widerstandsstreifen zeigen mit ihrer Längsrichtung von der Scheibe 3 zum Dauermagneten 5.

Der rotierende Körper 1 kann seine Lage in Achsenrichtung x ändern. Befindet sich dabei die Scheibe 3 mit ihrer Scheibenebene im Bereich B, bewegt sich der Rand 4 bei Rotation des Körpers 1 gegenüber dem feststehenden Magnetfeldsensor 2 periodisch hin und her. Dabei entsteht am Ort des Magnetfeldsensors 2 eine axiale Magnetfeldkomponente mit wechselnder Richtung. Die im Magnetfeldsensor 2 enthaltene Triggerschaltung ist so eingestellt, daß sie beim Nulldurchgang der axialen Komponente von einem Ausgangsspannungspegel auf einen anderen umschaltet.

Im ersten Teil der Fig. 2 ist der zeitliche Verlauf der Sensorausgangsspannung Uₐ für drei verschiedene axiale Lagen der Scheibenebene dargestellt. Im Bereich A befindet sich der Rand 4 ständig links von der Mitte des Magnetfeldsensors 2, so daß die axiale Magnetfeldkomponente ihr Vorzeichen nicht wechselt und die Triggerausgangsspannung auf dem niedrigen Spannungspegel steht. Im linken Teil des Bereiches B ändert das Magnetfeld nur kurzzeitig seine Richtung und damit das Sensorausgangssignal seinen Pegel. Im rechten Teil des Bereiches B zeigt das Magnetfeld während des größeren Zeitanteiles nach rechts, und damit liegt das Sensorausgangssignal länger auf dem höheren Pegel. Im Bereich C zeigt das Magnetfeld ständig nach rechts, und das Ausgangssignal wechselt seinen Pegel nicht mehr.

Durch die Auswerteschaltung 6 wird das Sensorausgangssignal Uₐ integriert. Deren Ausgangssignal Uₐₓ ist im unteren Teil von Fig. 2 als Funktion der axialen Position x dargestellt. Durch die Auswerteschaltung 7 wird die Frequenz des Sensorausgangssignals ausgewertet und als Drehzahlsignal U_{af} ausgegeben.

## Patentansprüche

1. Vorrichtung zum berührungslosen Messen der axialen Lage eines rotierenden Körpers (1), wobei
- ein magnetischer Geber (3) starr mit dem rotierenden Körper (1) verbunden ist,
- ein Magnetfeldsensor (2) außerhalb des Umfangs des Gebers (3) in der Nähe ihres Randes raumfest angeordnet ist,
- der Magnetfeldsensor (2) während der Rotation des Gebers (3) eine Impulsreihe erzeugt,
- der Geber (3) so gestaltet ist, daß bei axialer Verschiebung des rotierenden Körpers (1) eine Eigenschaft der Impulsreihe geändert wird,
- diese Eigenschaft der Impulsreihe in einer Auswerteschaltung (7) zur Anzeige der axialen Lage des rotierenden Körpers (1) benutzt wird,
**dadurch gekennzeichnet,** daß
- der Rand (4) des Gebers (3) bei Rotation des Körpers (1) sich periodisch in axialer Richtung gegenüber dem Magnetsensor (2) bewegt,
- der Magnetsensor (2) die axiale Magnetfeldkomponente mißt,
- die Auswerteschaltung (7) eine Triggerschaltung enthält, die so eingestellt ist, daß sie beim Nulldurchgang der axialen Komponente von einem Ausgangspegel auf einen anderen umschaltet, und
- die Auswerteschaltung (7) aus dem Tastverhältnis der Dauer des ersten Spannungspegels am Triggerausgang zur Dauer des zweiten Spannungspegels, die axiale Position des rotierenden Körpers ermittelt.

2. Vorrichtung nach Anspruch 1,
**dadurch gekennzeichnet,**
daß der Rand (4) der Scheibe (3) wechselseitig aus der Ebene der Scheibe (3) herausgebogen ist.

3. Vorrichtung nach Anspruch 1 oder 2,
**dadurch gekennzeichnet,**
daß die Ebene der Scheibe (3) mit ihrer Drehachse einen Winkel einschließt, der ungleich 90° ist.

4. Vorrichtung nach einem der Ansprüche 1 bis 3,
**dadurch gekennzeichnet,**
daß der Magnetfeldsensor (2) ein Sensor auf der Basis des anisotropen magnetoresistiven Effektes ist.

5. Vorrichtung nach einem der Ansprüche 1 bis 4,
**dadurch gekennzeichnet,**
daß die Scheibe (3) aus permanentmagnetischem Material besteht und in radialer Richtung magnetisiert ist.

6. Vorrichtung nach einem der Ansprüche 1 bis 4,
**dadurch gekennzeichnet,**
daß die Scheibe (3) aus weichmagnetischem Material besteht und sich ein Dauermagnet (5) in der Nähe befindet. /

7. Vorrichtung nach Anspruch 6,
**dadurch gekennzeichnet,**
daß sich der Magnetfeldsensor (2) zwischen dem Magneten und der Scheibe (3) befindet.

8. Vorrichtung nach einem der Ansprüche 1 bis 7,
**dadurch gekennzeichnet,**
daß die Auswerteschaltung (7) aus der Frequanz des Sensorsignals zusätzlich die Drehzahl des Körpers (1) ermittelt.

## Claims

1. A device for the contactless measurement of the axial position of a rotating body (1), wherein
- a magnetic transmitter (3) is rigidly connected to the rotating body (1),
- a magnetic field sensor (2) is disposed fixed in space outside the periphery of the transmitter (3) adjacent its edge,
- the magnetic field sensor (2) generates a series of pulses during the rotation of the transmitter (3),
- the transmitter (3) is so formed that a property of the series of pulses is changed with an axial displacement of the rotating body (1),
- said property of the series of pulses is used in an evaluating circuit (7) to display the axial position of the rotating body (1),
characterized in that
- on the rotation of the body (1) the edge (4) of the transmitter (3) moves periodically in the axial direction in relation to the magnetic field sensor (2),
- the magnetic field sensor (2) measures the axial magnetic field component,
- the evaluating circuit (7) comprises a trigger circuit which is so adjusted that it switches over from one output level to another at the zero passage of-the axial component, and
- the evaluating circuit (7) determines the axial position of the rotating body from the keying ratio between the duration of the first voltage level at the trigger output and the duration of the second voltage level.

2. A device according to claim 1, characterized in that the edge (4) of the disc (3) is bent alternatingly out of the plane of the disc (3).

3. A device according to claims 1 or 2, characterized in that the plane cf the disc (3) encloses with its axis of rotation an angle which is not equal to 90°.

4. A device according to one of claims 1 to 3, characterized in that the magnetic field sensor (2) is a sensor based on the anisotropic magnetoresistive effect.

5. A device according to one of claims 1 to 4, characterized in that the disc (3) is made of a permanent magnetic material and is magnetized in the radial direction.

6. A device according to one of claims 1 to 4, characterized in that the disc (3) is made of low-retentivity material, and a permanent magnet (5) is disposed adjacent.

7. A device according to claim 6, characterized in that the magnetic field sensor (2) is disposed between the magnet and the disc (3).

8. A device according to one of claims 1 to 7, characterized in that the evaluating circuit (7) also determines the speed of the body (1) from the frequency of the sensor signal.

## Revendications

1. Dispositif pour la mesure sans contact de la position axiale d'un corps tournant (1),
- un transmetteur magnétique (3) étant relié rigidement au corps tournant (1),
- un capteur de champ magnétique (2) étant disposé fixe dans l'espace à l'extérieur de la périphérie du transmetteur (3) au voisinage de son bord,
- le capteur de champ magnétique (2) produisant un train d'impulsions pendant la rotation du transmetteur (3),
- le transmetteur (3) étant conformé de telle manière que, dans le cas d'une translation axiale du corps tournant (1), une propriété du train d'impulsions est modifiée,
- cette propriété du train d'impulsions étant utilisée dans un circuit d'exploitation (7) pour la lecture de la position axiale du corps tournant (1),
caractérisé en ce que
- le bord (4) du transmetteur (3) se déplace périodiquement en direction axiale par rapport au capteur magnétique (2) pendant la rotation du corps (1),
- le capteur magnétique (2) mesure la composante axiale du champ magnétique,
- le circuit d'exploitation (7) contient un circuit de déclenchement qui est ajusté de telle manière qu'il commute d'un niveau de départ à un autre lors du passage par zéro de la composante axiale et
- le circuit d'exploitation (7) détermine la position axiale du corps tournant à partir du rapport durée de passage de courant pendant le cycle/durée de cycle de la durée du premier niveau de tension à la sortie du circuit de déclenchement à la durée du second niveau de tension.

2. Dispositif selon la revendication 1,
caractérisé en ce que le bord (4) du disque (3) est replié alternativement en dehors du plan du disque (3).

3. Dispositif selon la revendication 1 ou 2,
caractérisé en ce que le plan du disque (3) forme avec son axe de rotation un angle qui est différent de 90°.

4. Dispositif selon l'une des revendications 1 à 3,
caractérisé en ce que le capteur de champ magnétique (2) est un capteur sur le principe de l'effet magnétorésistif anisotrope.

5. Dispositif selon l'une des revendications 1 à 4,
caractérisé en ce que le disque (3) est constitué d'un matériau à aimantation permanente et est aimanté en direction radiale.

6. Dispositif selon l'une des revendications 1 à 4,
caractérisé en ce que le disque (3) est constitué d'un matériau magnétique doux et se trouve au voisinage d'un aimant permanent (5).

7. Dispositif selon la revendication 6,
caractérisé en ce que le capteur de champ magnétique (2) se trouve entre les aimants et le disque (3).

8. Dispositif selon l'une des revendications 1 à 7,
caractérisé en ce que le circuit d'exploitation (7) détermine additionnellement la vitesse de rotation du corps (1) à partir de la fréquence du signal du capteur.
